# FASCICULE DE BREVET EUROPEEN

(11) **EP 0 408 441 B1**
(45) Date de publication et mention de la délivrance du brevet: **07.12.1994**
(21) Numéro de dépôt: 90401981.7
(22) Date de dépôt: 09.07.1990
(51) Int. Cl.: G06K 7/06, G06K 19/06

(54) **Dispositif pour la vérification de cartes à microcircuit**
Vorrichtung zur Prüfung von Mikroschaltungskarten
Microcircuit card checking device

(30) Priorité: 12.07.1989 FR 8909420
(43) Date de publication de la demande: 16.01.1991
(73) Titulaire: CKD S.A., F-92024 Nanterre (FR)
(72) Inventeur: Bonnemoy, Marc, F-95450 Vigny (FR)
(74) Mandataire: Pernez, Helga

(56) Documents cités:
- EP-A- 0 213 046
- EP-A- 0 217 281
- FR-A- 2 580 834
- FR-A- 2 589 603
- US-A- 4 772 783
- PATENT ABSTRACTS OF JAPAN vol. 8, no. 129 (P-280)(1566) 15 juin 1984, & JP-A-59 32084 (DAINIPPON INSATSU) 21 février 1984,
- PATENT ABSTRACTS OF JAPAN vol. 10, no. 206 (P-478)(2262) 18 juillet 1986, & JP-A-61 46576 (OMRON TATEISI) 06 mars 1986,

## Description

L'invention est relative à un dispositif pour la vérification, de cartes à microcircuit.

De telles cartes à microcircuit peuvent être du type mixte, c'est-à-dire comporter en plus du microcircuit une piste magnétique.

On sait que ce type de cartes se développe considérablement, notamment dans les applications bancaires et transactions monétaires (cartes de paiement), pour les communications téléphoniques (carte porte-jetons ou télécarte), comme fichier portable par exemple comme carte d'identité ou permis de conduire à points, ou dans le domaine médical en particulier pour les cartes de sang, etc ... Ces cartes à microcircuit sont destinées à être introduites dans des terminaux de traitement, en particulier pour permettre à l'utilisateur d'effectuer diverses opérations.

L'invention a pour but, surtout, de fournir un dispositif qui permet de renseigner l'utilisateur sur l'état du microcircuit de la carte en lui indiquant si celui-ci est ou n'est plus exploitable sur les terminaux de traitement, et donc si la carte est opérationnelle ou non.

Il convient, en outre que le dispositif de vérification ne puisse en aucun cas, altérer ou modifier les informations contenues dans une mémoire du microcircuit.

Selon l'invention, un dispositif pour la vérification de cartes à microcircuit est caractérisé par le fait qu'il comprend des moyens propres à appliquer une tension inverse sur les différentes entrées du microcircuit par rapport à la masse, des moyens de limitation du courant sur chaque entrée, des moyens pour établir au moins un seuil de tension et des moyens de comparaison, pour chaque entrée, entre la tension présente sur cette entrée et un seuil associé, des moyens de visualisation étant en outre prévus en combinaison avec les moyens de comparaison pour indiquer si la carte est opérationnelle ou non.

De préférence, le dispositif est agencé pour permettre la vérification d'une absence de court-circuit sur chaque entrée, et l'état opérationnel de chaque entrée. Pour cela, les moyens de seuil sont propres à établir deux seuils S1 et S2, le seuil S1 étant destiné à permettre de vérifier si l'entrée n'est pas à la masse, tandis que le seuil S2 est destiné à permettre d'indiquer si l'entrée est à un état opérationnel. Le dispositif comporte, avantageusement, un inverseur ou un dispositif à temporisation permettant d'appliquer successivement le seuil S1 ou le seuil S2 à l'une des entrées des moyens de comparaison.

Un moyen de comparaison est prévu avantageusement pour chaque entrée et comporte un amplificateur opérationnel associé à cette entrée et branché en comparateur, une entrée de cet amplificateur étant reliée aux moyens de seuil tandis que l'autre entrée est reliée à une entrée de la carte à microcircuit, la sortie de cet amplificateur étant propre à commander un dispositif indicateur.

Le dispositif indicateur peut comprendre des voyants lumineux et être agencé pour que l'ensemble des voyants associés aux entrées de la carte à microcircuit reste éteint lorsque la carte ne présente aucun court-circuit, sur ses entrées, tandis que l'ensemble des voyants s'allume lorsque toutes les entrées de la carte sont opérationnelles

Avantageusement, les moyens propres à appliquer une tension inverse comprennent un interrupteur de sorte que la tension ne soit appliquée aux entrées de la carte à microcircuit que lorsque l'interrupteur est fermé.

Les vérifications évoquées précédemment sont des vérifications en statique de cartes à microcircuits.

Avantageusement, le dispositif de l'invention comporte des moyens de test dynamique de la carte à microcircuit, lorsque la vérification en statique s'est révélée satisfaisante.

Les moyens de test dynamique peuvent comprendre un commutateur analogique permettant de basculer le niveau de tension sur les bornes de la carte à microcircuit et de passer de la tension inverse à la tension normale, un microprocesseur propre à être activé séquentiellement après résultat positif du test statique, et des moyens d'affichage alphanumériques du résultat du test dynamique, le microprocesseur étant programmé pour permettre de lire certaines informations de la carte.

Par exemple, pour une télécarte, ou une carte du même type, ce test dynamique permettra d'afficher le nombre d'unités restant disponibles ou la mention "carte épuisée".

Selon un mode de réalisation avantageux, le dispositif comprend un microcontrôleur propre à commander automatiquement le déroulement des opérations de test statique et, le cas échant, de test dynamique, le début d'un cycle de contrôle étant commandé par la fermeture d'un contact poussoir, assurée par l'action de la carte à microcircuit, en fin d'introduction, le dispositif indicateur comprenant un afficheur.

De préférence, le dispositif comprend un multiplexeur, combiné avec au moins deux amplififaceuts branchés en comparateurs, pour permettre l'analyse séquentielle de chaque contact de la carte à microcircuit.

Le dispositif est agencé de préférence pour effectuer une mesure de courant sur les sources d'alimentation et un test sur les tensions.

Le dispositif pour la vérification de cartes à microcircuit peut être constitué par un boîtier autonome et portable de faibles dimensions, permettant une analyse sur le site, ce boîtier comportant un logement débouchant à l'extérieur par une fente dans laquelle peut être introduite la carte à microcircuit.

Selon une autre possibilité, le dispositif de vérification est inclus dans un système d'exploitation de cartes pour assurer un précontrôle de sécurité avant exploitation de la carte.

L'invention consiste, mises à part les dispositions exposées ci-dessus, en un certain nombre d'autres dispositions dont il sera plus explicitement question ci-après à propos d'un mode de réalisation particulier décrit avec référence aux dessins ci-annexés, mais qui n'est nullement limitatif.

La figure 1, de ces dessins, est une vue schématique en perspective d'un dispositif de vérification pour cartes à microcircuit, autonome et portable, selon l'invention.

La figure 2, est un schéma électrique des circuits pour la vérification en statique.

La figure 3 est un schéma synoptique de la partie du dispositif pour réaliser un test dynamique.

La figure 4, enfin, est un schéma synoptique, d'une variante de réalisation à déroulement automatique du cycle de vérification.

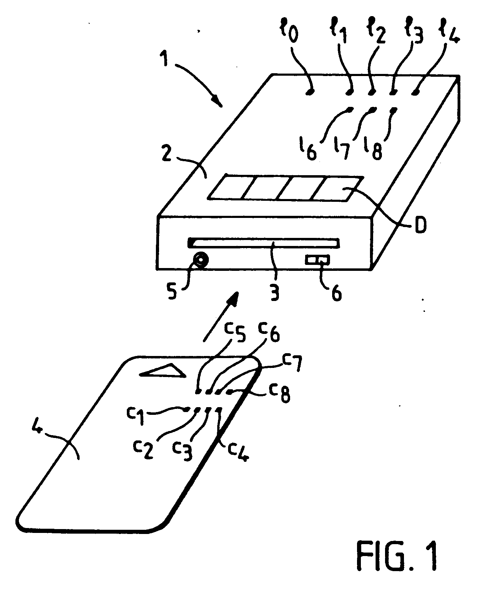

En se reportant à la figure 1, on peut voir que le dispositif de vérification 1 se présente, dans l'exemple considéré, sous la forme d'un boîtier 2 autonome et portable de faibles dimensions pour analyses sur le site. Ce boîtier 2 a une forme sensiblement parallélépipédique rectangle et comporte, sur une de ses petites faces, une fente 3 par laquelle peut être introduite une carte 4 à microcircuit, destinée à être vérifiée. Dans l'exemple considéré, la carte 4, de dimension standard, est munie d'un microcircuit comportant huit contacts d'entrée, c1 - c8, l'un de ces contacts, par exemple c5 correspondant à la masse.

Le boîtier 2 comporte, sur la face munie de la fente 3, au-dessous de cette fente, d'un côté un bouton-poussoir 5 et, de l'autre côté, un inverseur 6 dont il sera question plus loin.

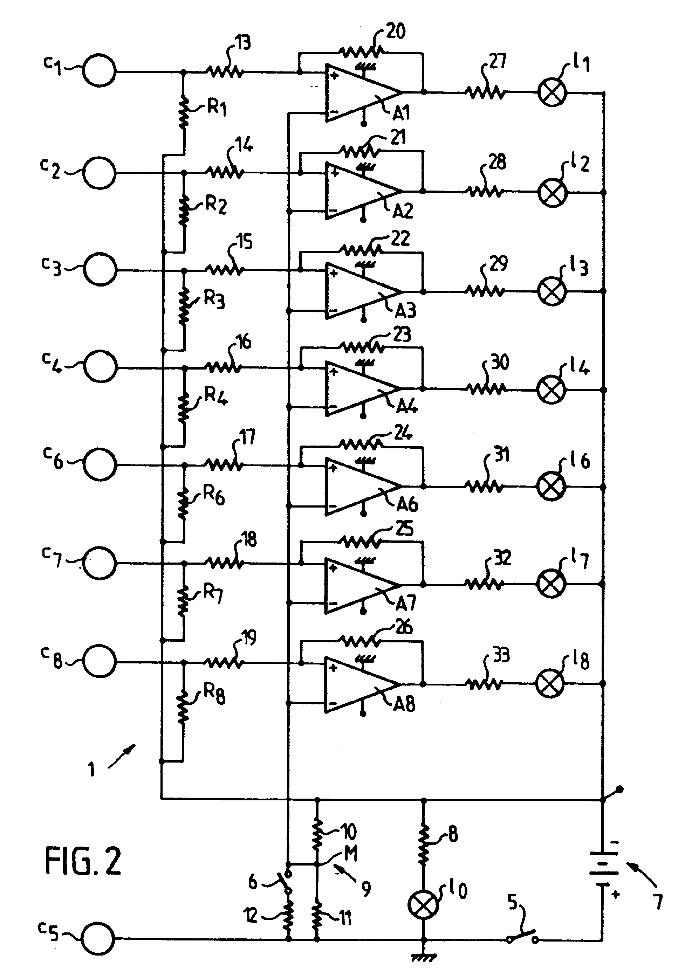

Le boîtier 2 comporte, à l'intérieur, un circuit qui va être décrit avec référence à la figure 2. Sur sa grande face supérieure, le boîtier 2 est muni d'un dispositif indicateur, par exemple constitué par des diodes électroluminescentes, l1 - l4 et l6 - l8 correspondant aux diverses entrées du microcircuit de la carte 4, à l'exception de l'entrée c5 correspondant à la masse. En variante, le dispositif indicateur pourrait être constitué par un afficheur à cristaux liquides semblable à l'afficheur D dont il sera question plus loin, ou par tout moyen équivalent.

En outre, un voyant supplémentaire l0 est prévu à l'écart de la série de voyants l1 - l8.

En se reportant à la figure 2, on voit que le dispositif 1 comprend une source de tension continue 7 formée par une ou plusieurs piles ou par une batterie, branchées de manière à appliquer une tension inverse sur les différentes entrées c1, c2, c3, c4, c6, c7 et c8 du microcircuit par rapport à la masse qui correspond à l'entrée c5. La borne + (positive) de la source 7 est reliée à la masse par l'intermédiaire du poussoir 5. Le circuit électrique du dispositif 1 est muni de contacts associés aux diverses entrées c1 - c8 de la carte 4. Par souci de simplification, les contacts du circuit de la figure 2 ont été désignés par la même lettre suivie du même chiffre que l'entrée correspondante de la carte 4 qui vient s'appliquer contre le contact du circuit lorsque la carte 4 est complètement engagée dans la fente 3.

Le voyant l0 est branché entre la masse et la borne - (négative) de la source 7, par l'intermédiaire d'une résistance 8. Lorsque le poussoir 5 est enfoncé, le circuit d'alimentation du voyant l0 est fermé et ce voyant s'allume.

La tension inverse appliquée sur les différentes entrées du microcircuit est comprise de préférence entre - 3 V et - 5V par rapport à la masse ou substrat du microcircuit. Cette tension est appliquée lorsque le bouton-poussoir 5 est enfoncé, ce qui permet de réduire l'usure de la source 7.

La borne - de cette source est reliée à chacun des contacts correspondant aux entrées c1...c4 et c6 - c8 par l'intermédiaire d'une résistance correspondante R1, R2....R8 choisie de manière à limiter le courant sur chacune des entrées du microcircuit, conformément aux spécifications des constructeurs de composants.

Des moyens 9 sont prévus pour établir deux seuils de tension S1, S2. Ces moyens 9 comprennent deux résistances 10, 11 branchées en série entre les bornes - et + de la source 7. Au point milieu M, situé entre ces résistances 10 et 11, est prélévée la tension de seuil S1 ou S2. Ce point M est relié à une borne de l'inverseur 6 dont l'autre borne est reliée à la masse (et donc à la borne + de la source 7) par une résistance 12. Lorsque l'inverseur 6 est dans la position de la figure 2 pour laquelle le point milieu M est isolé de la résistance 12, le seuil obtenu correspond à S2. Lorsque l'inverseur 6 est fermé, ce qui met en circuit la résistance 12 parallèlement à la résistance 11, le seuil obtenu correspond à S1 pour lequel la tension inverse par rapport à la masse est plus faible que pour S2.

Le point milieu M est relié en parallèle aux entrées inverseuses d'amplificateurs opérationnels A1...A4, A6...A8 associés aux entrées c1....c4 et c6-c8 ; ces amplificateurs A1-A8 sont branchés en comparateurs et leur entrée non inverseuse est reliée par l'intermédiaire d'une résistance appropriée, respectivement 13 à 19, aux entrées c1-c4 et c6-c8.

La sortie de chaque amplificateur A1-A8 est reliée à son entrée non inverseuse par une résistance de valeur appropriée, respectivement 20 à 26, pour assurer une hystéresis au système de commutation.

Chaque sortie des amplificateurs A1-A8 est en outre reliée par l'intermédiaire d'une résistance de valeur appropriée, respectivement 27 à 33, à une borne d'un voyant lumineux respectif l1-l4, l6-l8, dont l'autre borne est reliée à la borne - de la source 7.

Les contrôles effectués avec le dispositif 1 de l'invention permettent la vérification d'une absence de court-circuit et de la présence d'une diode de protection ayant des caractéristiques correctes. Les résultats observés sur les entrées c1 à c4 et c6 à c8 sont :
- ou bien proches de 0 V à - 0,10 V, ce qui correspond à la présence d'un court-circuit sur l'entrée considérée entre cette entrée et la masse;
- soit voisins de la valeur d'une tension de diode, par exemple de l'ordre de - 0,7 V, avec un courant prédéterminé, sensiblement à 10 micro-ampères ; dans ce cas la liaison est correcte sur l'entrée considérée ;
- soit compris entre la valeur de la tension de diode + 30 % et la valeur de la tension de source ; dans ce cas, la liaison pour l'entrée considérée n'est pas correcte, ou bien encore, le circuit a des caractéristiques d'entrée hors norme.

Les voyants l1 à l8, pour la visualisation de l'état des entrées, peuvent être de couleurs identiques ou différentes. Le cas échéant, on pourrait prévoir un seul voyant pour donner un résultat global. En cas de défaut, l'utilisateur saurait que la carte présente un défaut, mais sans indication de l'entrée ou des entrées sur lesquelles se situent le ou les défauts.

Le seuil S1 le plus faible permet de vérifier si l'entrée n'est pas à la masse (0 V). Si c'est bien le cas, le voyant correspondant de l1-l8 ne s'allume pas.

Le seuil S2 permet d'indiquer si les entrées ont un état opérationnel ; si c'est bien le cas, le voyant correspondant l1-l8 s'allume.

Il est à noter que ce dispositif peut convenir pour toutes les cartes qui ont un microcircuit et quelle que soit la position du microcircuit. Toutes les cartes à microcircuit répondant à des normes ISO, ou autres, peuvent être analysées avec le dispositif de l'invention.

Ceci étant, l'utilisation du dispositif conforme à l'invention est la suivante .

L'utilisateur introduit la carte dans la fente 3 et l'emmène en butée. Des moyens de détection (non-représentés) du bon positionnement de la carte peuvent être prévus.

L'utilisateur appuie ensuite sur le poussoir 5 pour appliquer les tensions inverses sur chaque entrée c1-c8. Le témoin lumineux formé par le voyant l0 s'allume indiquant l'établissement d'une tension correcte.

A l'aide de l'inverseur 6, l'opérateur choisit le seuil de contrôle.

En position S1 (inverseur 6 dans la position fermée qui n'est pas représentée sur la figure 2), et alors que le poussoir 5 est enfoncé, si la carte 4 ne présente aucun court-circuit, aucun des voyants l1-l8 ne s'allume.

Lorsque l'inverseur 6 est mis sur la position correspondant au seuil S2 (position ouverte représentée sur la figure 2), après appui sur le poussoir 5, tous les voyants l1-l8 doivent être allumés si la carte est opérationnelle. Si l'un de ces voyants n'est pas allumé, l'entrée correspondante présente une liaison qui n'est pas correcte ou des caractéristiques hors norme.

Ce dispositif permet de vérifier qu'il existe :
- une continuité entre les contacts d'entrée et le microcircuit ;
- la présence de protections entre les entrées et le substrat du microcircuit ;
- l'absence d'un court-circuit entre les entrées et le 0 V.

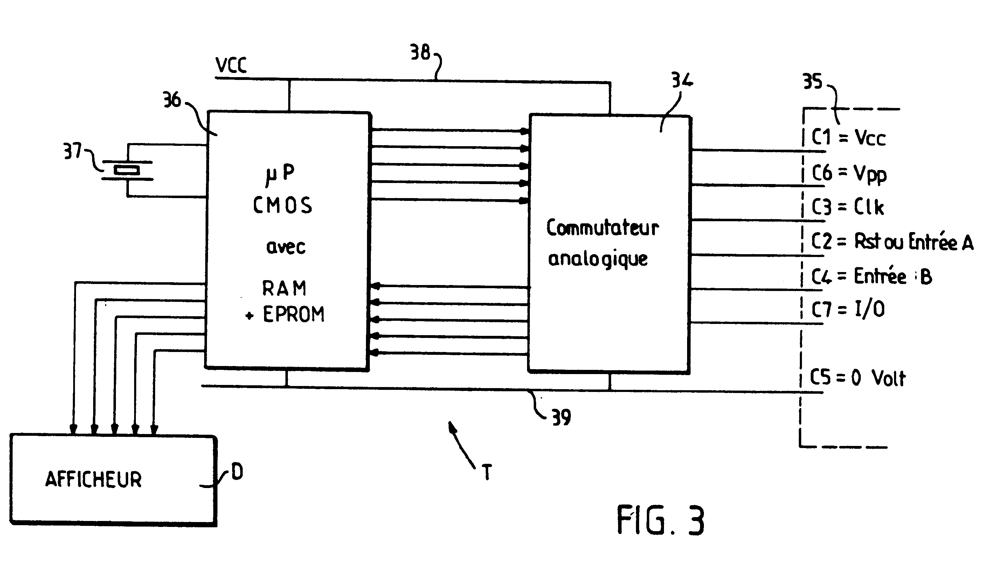

En se reportant à la figure 3 on peut voir un schéma des moyens T du dispositif 1, prévus pour réaliser un test dynamique du microcircuit de la carte, après résultat positif du test statique.

Ce test dynamique consiste à vérifier la réponse du microcircuit lorsque des ordres simples lui sont présentés. Pour des raisons de sécurité, l'accès au microcircuit ne sera réalisé qu'en lecture.

Les moyens de test dynamique T comprennent un commutateur analogique 34 relié à une interface 35 avec la carte à microcircuit. Le commutateur 34 permet de basculer le niveau de tension sur les bornes de la carte et d'appliquer, pour le test dynamique, une tension normale au lieu de la tension inverse utilisée pour le test statique. Dans l'exemple considéré, la borne C8 de la carte n'est pas utilisée, cette entrée n'étant pas opérationnelle.

Les moyens T comprennent en outre un microprocesseur 36, du type CMOS, combiné avec une mémoire vive (RAM) et une mémoire morte programmable (EPROM).

Le quartz 37 de l'horloge interne du microprocesseur 36 a été schématiquement représenté sur la figure 3.

Un afficheur D à cristaux liquides, en particulier à au moins 4 digits alphanumériques, est en outre prévu. Des liaisons par lignes "bus" sont prévues entre le microprocesseur 36, le commutateur 34 et l'afficheur D.

L'alimentation électrique est assurée par une ligne 38 au potentiel Vcc et une ligne 39 au potentiel 0 volt.

Le microprocesseur 36 est activé séquentiellement après résultat positif du test statique. Il est programmé pour lire des informations du microcircuit de la carte et pour afficher, sur D, le résultat du test dynamique. Cet affichage restera présent pendant environ 10 secondes.

Les moyens de test dynamique T permettent, par exemple, les vérifications suivantes :
- sur une télécarte ou une carte du même type, affichage du nombre d'unités encore disponibles ou d'un message signifiant "carte épuisée" ;
- sur une carte de type bancaire, l'état de celle-ci après analyse des mots en réponse à une initialisation, par exemple :
- carte bloquée (par exemple suite à l'introduction de trois codes faux) ;
- carte muette (défaut de la carte) ;
- zone état pleine (la carte a été utilisée au maximum) ;
- carte correcte.

Ce test dynamique constitue un complément intéressant au test statique.

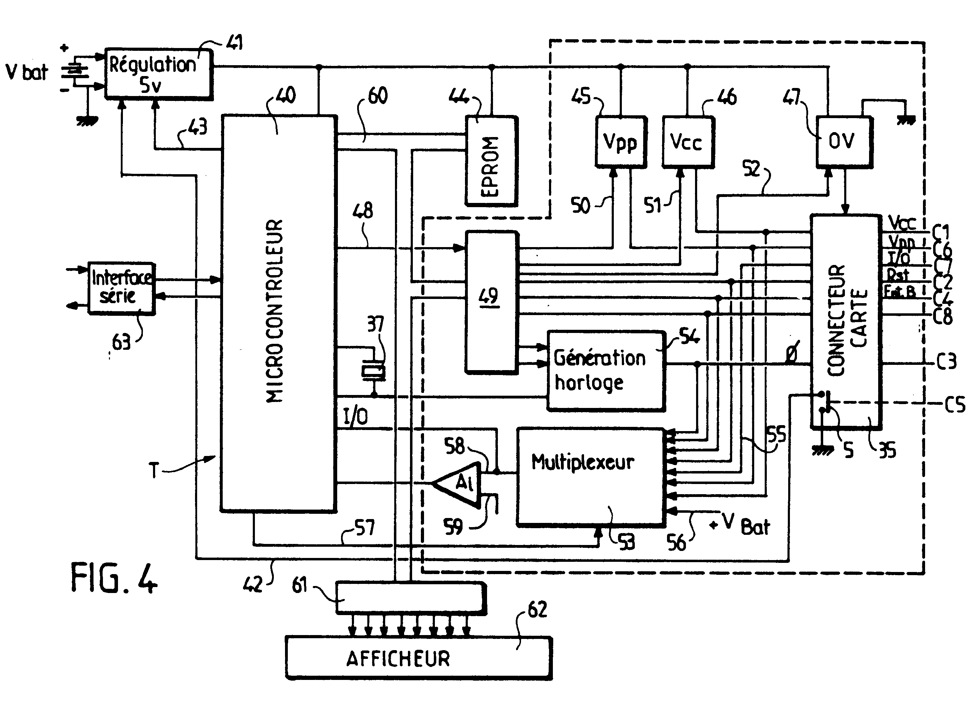

La figure 4 est un synoptique d'une variante de réalisation de l'invention faisant intervenir un microcontrôleur 40 (micro-ordinateur agissant en microcontrôleur), cette variante permettant d'accomplir automatiquement les opérations de test statique décrites à propos de la figure 2 et les opérations de test dynamique décrites à propos de la figure 3.

Un certain nombre de fonctions supplémentaires telles que : mesures du courant sur les alimentations Vpp et Vcc et plus généralement sur les sources d'alimentation ; test de batterie et test de tension ; test logique à l'initialisation, peuvent être réalisées.

La zone de la figure 4, délimitée par des tirets, permet d'assurer les fonctions décrites à propos du schéma de la figure 2.

Le dispositif représenté sur la figure 4 est alimenté, à partir d'une source de tension 7, constituée par une pile 9 volts ou une batterie, par une régulation 41 délivrant une tension régulée de 5 volts.

On retrouve une interface 35, formée par un connecteur, pour la carte à microcircuit. L'interrupteur 5 commandant, par l'intermédiaire de la liaison 42, la mise en marche de la régulation 41 (et donc de l'alimentation) est prévu dans l'interface 35 de manière à se fermer sous l'action de la carte à microcircuit, engagée dans le connecteur 35, en fin d'introduction de la carte.

Un port du microcontrôleur 40 est relié à une borne de la régulation 41, par une ligne 43, pour commander automatiquement l'arrêt de la régulation 41 lorsque le cycle des opérations de vérification statique et dynamique d'une carte est terminée.

La sortie de la régulation 41 alimente, en parallèle, le microcontrôleur 40, une mémoire EPROM 44 associée au microcontrôleur, et trois générateurs programmables de tension 45, 46, 47 permettant de simuler les tensions Vpp, Vcc et inverse (0v) pour la carte à tester.

La commande des générateurs 45, 46, 47 est assurée par le microcontrôleur 40 à partir d'un port relié par une ligne 48 à une entrée de commande d'une bascule à trois états. ("Latch tri-state") 49. Les sorties d'une telle bascule peuvent prendre soit un état "1", soit un état "0", soit un troisième état à forte impédance.

Trois sorties de la bascule 49 sont reliées, respectivement, par des lignes 50, 51, 52 à une entrée de commande des générateurs programmables de tension 45, 46, 47.

Les sorties des générateurs 45, 46 sont raccordées, d'une part à deux entrées d'un multiplexeur 53 et, d'autre part, à l'interface 35 de manière à être respectivement en liaison avec les entrées c6 (Vpp) et c1 (Vcc) d'une carte à tester. La sortie du générateur 47 est reliée à l'interface 35 de sorte que la tension inverse puisse être appliquée sur les différentes entrées du microcircuit d'une carte à tester.

Trois autres sorties de la bascule 49 sont raccordées à l'interface 35 de manière à être respectivement en liaison avec les entrées c2 (Reset), c4 (Entrée B) et c8 (Fusible) du microcircuit d'une carte à tester engagée dans le connecteur 35. Ces trois sorties de la bascule 49 sont également raccordées à trois entrées du multiplexeur 53.

Deux sorties de la bascule 49 sont reliées à deux entrées d'un circuit 54 de génération d'horloge piloté par le quartz 37 de l'horloge interne du microcontrôleur 40. Une sortie du circuit 54 est raccordée à une entrée du multiplexeur, et à l'interface 35 de manière à être en liaison avec l'entrée c3 (Horloge) du microcircuit.

Une autre entrée du multiplexeur 53 est raccordée, par une ligne 55, à l'interface 35 de manière à être en liaison avec l'entrée c7 (I/O) du microcircuit de la carte à tester. Une autre entrée est reliée par une ligne 56 à la borne +Vbat.

La commande du multiplexeur 53 est assurée par le microcontrôleur 40 à partir d'un port relié par une ligne 57 au multiplexeur.

Au moins deux comparateurs Ai, correspondant à chacun des deux seuils de comparaison, ont une entrée 58 reliée à une sortie du multiplexeur 53 et une autre entrée 59 reliée à une tension de référence commandée par le microcontrôleur 40. L'entrée 58 est en outre reliée à un port entrée/sortie (I/O) du microcontrôleur 40. La sortie d'un comparateur Ai est reliée à un port de lecture du microcontrôleur 40.

Le multiplexeur 53, combiné avec la bascule 49, et leur adressage permettent d'analyser séquentiellement, par le microcontrôleur 40 du système, les états des différentes entrées c1...c8 du microcircuit à tester.

Des faisceaux de ligne bus 60 relient le microcontrôleur 40 à la mémoire 44, à la bascule 49 et à une autre bascule (ou latch) 61 dont les sorties sont reliées à un afficheur 62 par exemple à 6 digits, notamment à cristaux liquides.

Une interface série 63 est en outre prévue pour permettre au microcontrôleur 40 de communiquer avec des périphériques, en particulier un lecteur à piste magnétique, ou un afficheur de type "Minitel".

Comme pour les réalisations précédentes, lors du test statique (réalisé automatiquement par le microcontrôleur 40, sans intervention manuelle comme dans le cas de la figure 2) par application de la tension inverse à partir du générateur 47, les comparateurs Ai permettent d'effectuer, sur les entrées c1-c8:
- la mesure de continuité ;
- la vérification de l'absence de court-circuit sur les entrées ;
- la vérification de la présence et de l'état des diodes de protection sur les entrées.

Le dispositif de la figure 4 permet, lors du test dynamique, de réaliser en plus des vérifications déjà décrites à propos de la figure 3, la mesure des consommations sur les entrées Vpp et Vcc.

Le test dynamique peut être complété par une lecture de la zone à accès libre sur la carte à microcircuit, avec visualisation du contenu sur l'afficheur local 62 en mode séquentiel, ou vers l'extérieur à l'aide de la liaison série 63.

L'afficheur 62 peut, éventuellement, être remplacé par une réponse vocale.

Le microcontrôleur 40 permet de gérer une base de temps qui ouvre le champ d'application de l'appareil, par exemple en permettant de faire un grillage de bits au fur et à mesure de la consommation.

La liaison série 63 permet de se raccorder à un terminal du genre "Minitel" et d'établir un dialogue avec la carte à tester, grâce au clavier du terminal, si on dispose du code d'accès à la carte.

Cette liaison série permet également une connexion à une tête de lecture magnétique pour la lecture d'une piste magnétique (norme ISO) qui équipe des cartes type mixte ou à pistes magnétiques seules. Cette tête de lecture magnétique serait incorporée dans le boîtier 2.

Le microcontrôleur 40 permet de faire un test logique à l'initialisation, par exemple dans le cas d'une télécarte : analyse du nombre d'unités téléphoniques restantes ou, dans le cas d'une carte bancaire, analyse par deux mots "compte-rendu" par exemple "carte valide - deux codes faux", cette dernière indication signifiant que lors d'une tentative d'utilisation précédente de la carte, deux codes faux ont été entrés.

La description a été effectuée à propos d'un dispositif formé par un boîtier 2 autonome et portable.

Il est clair que le dispositif de vérification de l'invention peut être inclus dans un système d'exploitation de cartes pour assurer un précontrôle de sécurité avant exploitation des cartes.

## Revendications

1. Dispositif pour la vérification de cartes à microcircuit, caractérisé par le fait qu'il comprend des moyens (7, 47) propres à appliquer une tension inverse sur les différentes entrées (c1-c8) du microcircuit par rapport à la masse, des moyens de limitation (R1-R8 ; 40, 49, 45, 46, 47) du courant sur chaque entrée, des moyens (9, 40) pour établir au moins un seuil de tension et des moyens de comparaison (A1-A8, Ai) pour chaque entrée, entre la tension présente sur cette entrée et un seuil associé, des moyens de visualisation (l1-l8 ; 62) étant en outre prévus en combinaison avec les moyens de comparaison pour indiquer si la carte est opérationnelle ou non.

2. Dispositif selon la revendication 1, caractérisé par le fait qu'il est agencé pour permettre la vérification d'une absence de court-circuit sur chaque entrée, et l'état opérationnel de chaque entrée.

3. Dispositif selon la revendication 2, caractérisé par le fait que les moyens de seuil (9 ; 40) sont propres à établir deux seuils (S1 et S2), le seuil (S1) étant destiné à permettre de vérifier si l'entrée n'est pas à la masse, tandis que le seuil (S2) est destiné à permettre d'indiquer si l'entrée (c1-c8) est à un état opérationnel.

4. Dispositif selon la revendication 3, caractérisé par le fait qu'il comporte un inverseur (6) permettant d'appliquer successivement le seuil (S1) ou le seuil (S2) à l'une des entrées (c1-c8) des moyens de comparaison (A1-A8).

5. Dispositif selon l'une quelconque des revendications précédentes, caractérisé par le fait qu'un moyen de comparaison est prévu pour chaque entrée (c1-c8) et comporte un amplificateur opérationnel (A1-A8) associé à cette entrée et branché en comparateur, une entrée de cet amplificateur étant reliée aux moyens de seuil (9) tandis que l'autre entrée est reliée à une entrée (c1-c8) de la carte à microcircuit, la sortie de cet amplificateur étant propre à commander un dispositif indicateur (l1-l8 ; 62).

6. Dispositif selon l'une quelconque des revendications précédentes, caractérisé par le fait que le dispositif indicateur comprend des voyants lumineux (l1-l8) et que l'ensemble de ces voyants (l1-l8) associés aux entrées (c1-c8) de la carte à microcircuit reste éteint lorsque la carte (4) ne présente aucun court-circuit sur ses entrées, tandis que l'ensemble des voyants (l1-l8) s'allume lorsque toutes les entrées de la carte sont opérationnelles.

7. Dispositif selon l'une quelconque des revendications précédentes, caractérisé par le fait que les moyens propres à appliquer une tension inverse comprennent un interrupteur (5) de sorte que la tension ne soit appliquée aux entrées (c1-c8) de la carte (4) à microcircuit que lorsque l'interrupteur (5) est fermé.

8. Dispositif selon l'une quelconque des revendications précédentes, caractérisé par le fait qu'il est constitué par un boîtier (2) autonome et portable de faibles dimensions, permettant une analyse sur le site, ce boîtier comportant un logement débouchant à l'extérieur par une fente (3) dans laquelle peut être introduite la carte à microcircuit.

9. Dispositif selon l'une quelconque des revendications précédentes, caractérisé par le fait qu'il comporte des moyens de test dynamique (T) de la carte à microcircuit.

10. Dispositif selon la revendication 9, caractérisé par le fait que les moyens de test dynamique comprennent un commutateur analogique (34), permettant de basculer le niveau de tension sur les bornes de la carte à microcircuit et de passer de la tension inverse à la tension normale, un microprocesseur (36) propre à être activé séquentiellement après résultat positif du test statique, et des moyens d'affichage alphanumériques (D) du résultat du test dynamique, le microprocesseur étant programmé pour permettre de lire certaines informations de la carte.

11. Dispositif selon l'une quelconque des revendications 1 à 9, caractérisé par le fait qu'il comprend un microcontrôleur (40) propre à commander automatiquement le déroulement des opérations de test statique et, le cas échéant, de test dynamique, le début d'un cycle de contrôle étant commandé par la fermeture d'un contact poussoir (5), assurée par l'action de la carte à microcircuit, en fin d'introduction, le dispositif indicateur comprenant un afficheur (62).

12. Dispositif selon la revendication 11, caractérisé par le fait qu'il comprend un multiplexeur (53), combiné avec au moins deux amplificateurs (Ai) branchés en comparateurs, pour permettre l'analyse séquentielle de chaque contact de la carte à microcircuit.

13. Dispositif selon la revendication 11 ou 12, caractérisé par le fait qu'il est agencé pour effectuer une mesure de courant sur les sources d'alimentation (45, 46) et un test sur les tensions.

14. Dispositif selon l'une quelconque des revendications 11 à 13, caractérisé par le fait qu'il comporte une interface série (63) pour permettre au microcontrôleur (40) de communiquer avec des périphériques, en particulier un lecteur à piste magnétique ou un afficheur de type "Minitel".

15. Dispositif selon l'une quelconque des revendications 1 à 7, caractérisé par le fait qu'il est inclus dans un système d'exploitation de cartes pour assurer un précontrôle de sécurité avant l'exploitation de la carte.

## Patentansprüche

1. Vorrichtung zur Prüfung von Mikroschaltungskarten, die sich wie folgt charakterisieren läßt: sie umfaßt die Vorrichtungen (7, 47), die dazu dienen, eine bezüglich der Masse inverse Spannung an den verschiedenen Eingängen (c1 - c8) der Mikroschaltung anzulegen, Vorrichtungen zur Begrenzung der Ströme (R1 - R8, 40, 45, 46, 47) an allen Eingängen, sowie die Vorrichtungen (9, 40) zur Erzeugung von wenigstens einer Schwellenspannung, die Vorrichtungen (A1 - A8, A1) zum Vergleich der jeweiligen Eingangsspannungen mit einer anliegenden Schwelle und schließlich die Vorrichtungen (l1 - l8; 62) zur Visualisierung, die auch dazu dienen, in Verbindung mit den Vergleichsvorrichtungen anzuzeigen, ob die Karte funktionsfähig ist.

2. Vorrichtung in Übereinstimmung mit dem unter 1 aufgeführten Patentanspruch, die gekennzeichnet ist, dadurch daß sie die Überprüfung der Kurzschlußfreiheit sowie der Funktionsfähigkeit jedes Einganges ermöglicht.

3. Vorrichtung in Übereinstimmung mit dem unter 2 aufgeführten Patentanspruch, die dadurch gekennzeichnet ist, daß die Vorrichtungen zur Schwellenerzeugung (9, 40) geeignet sind, zwei Schwellenspannungen (S1 und S2) zu erzeugen, wobei die Schwelle (S1) dazu dient, die Überprüfung der Massefreiheit des jeweiligen Eingangs zu ermöglichen, während die Schwelle (S2) dazu dient, eine Anzeige zu ermöglichen, ob der Eingang (c1 - c8) sich in einem funktionsfähigem Zustand befindet.

4. Vorrichtung in Übereinstimmung mit dem unter 3 aufgeführten Patentanspruch, die dadurch gekennzeichnet ist, daß sie einen Schalter (6) umfaßt, der es ermöglicht, nacheinander die Schwellenspannung (S1) oder die Schwellenspannung (S2) an einen der Eingänge (c1 - c8) der Vergleichsvorrichtung (A1 - A8) anzulegen.

5. Vorrichtung in Übereinstimmung mit einem der vorerwähnten Patentansprüche, die dadurch gekennzeichnet ist, daß sie aus einer Vergleichsvorrichtung für jeden Eingang (c1 - c8) besteht und im Einzelnen jeweils einen Operationsverstärker (A1 - A8) umfaßt, der an den jeweiligen Eingang angeschlossen ist und als Komparator schaltet. Ein Eingang des Verstärkers ist an die Schwellenvorrichtung (9) angeschlossen, der andere Eingang an einen der Eingänge (c1 - c8) der Mikroschaltungskarte. Der Ausgang des Verstärkers steuert eine Anzeigevorrichtung (l1 - l8, 62).

6. Vorrichtung in Übereinstimmung mit einem der vorerwähnten Patentansprüche, die dadurch gekennzeichnet ist, daß die Anzeigevorrichtung die Kontrollampen (l1 - l8) umfaßt. Keine der Kontrollampen (l1 - l8), die mit den Eingängen (c1 - c8) der Mikroschaltungskarte verbunden sind, leuchtet, wenn die Eingänge der Karte kurzschlußfrei sind; während alle Kontrollampen (l1 - l8) leuchten, wenn die Eingänge der Karte funktionsfähig sind.

7. Vorrichtung in Übereinstimmung mit einem der vorerwähnten Patentansprüche, die dadurch gekennzeichnet ist, daß die Vorrichtungen zum Anlegen einer inversen Spannung einen Schalter (5) umfassen, so daß die Spannung an den Eingängen (c1 - c8) der Mikroschaltungskarte (4) nur dann anliegt, wenn der Schalter (5) geschlossen ist.

8. Vorrichtung in Übereinstimmung mit einem der vorerwähnten Patentansprüche, die dadurch gekennzeichnet ist, daß sie aus einem kleinen unabhängigen und tragbaren Gehäuse (2) besteht und so die Untersuchung vor Ort ermöglicht: dieses Gehäuse enthält eine Aufnahmevorrichtung, mit einer Schlitzöffnung (3) an der Außenseite, in den die Mikroschaltungskarte eingeschoben werden kann.

9. Vorrichtung in Übereinstimmung mit einem der vorerwähnten Patentansprüche, die dadurch gekennzeichnet ist, daß sie eine Vorrichtung zur Durchführung eines dynamischen Tests (T) der Mikroschaltungskarte umfaßt.

10. Vorrichtung in Übereinstimmung mit dem unter 9 aufgeführten Patentanspruch, die dadurch gekennzeichnet ist, daß die Vorrichtungen für den dynamischen Test folgendes umfaßt:
einen analogen Kommutator (34), der eine Umkehrung des Spannungsniveaus an den Kontakten der Mikroschaltungskarte ermöglicht und damit den Überhang von der inversen Spannung zur normalen Spannung, einen Mikroprozessor (36), der dazu geeignet ist, nach einem positiven Ergebnis des statischen Tests sequentiell aktiviert zu werden, Vorrichtungen zur alphanumerischen Anzeige (D) des Resultats des dynamischen Tests, wobei der Mikroprozessor so programmiert ist, daß bestimmte Informationen auf der Karte gelesen werden können.

11. Vorrichtung in Übereinstimmung mit einem der unter 1 bis 9 aufgeführten Patentansprüche, die dadurch gekennzeichnet ist, daß sie einen Mikrocontroller (40) umfaßt, der dazu dient, den Ablauf der einzelnen Schritte des statischen Tests und gegebenenfalls des dynamischen Tests automatisch zu steuern, wobei der Beginn eines Steuerzyklus durch Schließen eines Druckkontaktes (5) ausgelöst wird, was wiederum durch das vollständige Einschieben der Mikroschaltungskarte gewährleistet wird; die Anzeigevorrichtung enthält eine Flüssigkristallanzeige.

12. Vorrichtung in Übereinstimmung mit dem unter 11 aufgeführten Patentanspruch, die dadurch gekennzeichnet ist, daß sie aus einem Multiplexer (53) besteht, der kombiniert mit mindestens zwei als Komparatoren geschalteten Verstärkern (A1) die sequentielle Untersuchung jedes Kontaktes auf der Mikroschaltungskarte ermöglicht.

13. Vorrichtung in Übereinstimmung mit dem unter 11 oder 12 aufgeführten Patentanspruch, die dadurch gekennzeichnet ist, daß sie für eine Strommessung über den Versorgungsquellen, sowie für einen Spannungstest eingerichtet ist.

14. Vorrichtung in Übereinstimmung mit einem der unter 11 bis 13 aufgeführten Patentansprüche, die dadurch gekennzeichnet ist, daß sie aus einem seriellen Interface (63) besteht, um dem Mirkocontroller (40) zu ermöglichen, mit angeschlossenen Zusatzgeräten zu kommunizieren, besonders etwa einem Lesegerät für Magnetstreifen oder einem Display vom Typ "Minitel" (kleiner Videotext-Terminal mit Bildschirmgerät und alphanumerischer Tastatur, der von der französischen Telecom vertrieben wird.)

15. Vorrichtung in Übereinstimmung mit einem der unter 1 bis 7 aufgeführten Patentansprüche, die dadurch gekennzeichnet ist, daß sie in ein Kartennutzungssystem eingebunden ist, um vor der Benutzung der Karte eine Sicherheitskontrolle zu gewährleisten.

## Claims

1. A device for checking microcircuit cards, characterized in that said device includes means (7, 47) adapted to apply an inverse voltage to different microcircuit inputs (c1 - c8) with reference to ground, limitating means (R1 - R8; 40, 49, 45, 46, 47) to limitate each input current, means (9, 40) to establish at least a voltage threshold and comparing means (A1 - A8, Ai) for each input, for comparing the voltage at said input to an associated threshold, display means (11-18; 62) further being provided in combination with said comparing means to indicate whether said card is operational or not.

2. The device as recited in claim 1, characterized in that said device is arranged to allow a short-circuit absence to be checked at each input, along with the operational condition of each input.

3. The device as recited in claim 2, characterized in that said threshold means (9; 40) are adapted to set two thresholds (S1 and S2), with one threshold (51) being provided in order to check if the input is grounded, while the other threshold (52) is provided to indicate whether input (C1 - C8) is in an operational condition.

4. The device as recited in claim 3, characterized in that said device includes an inverter (6) to successively apply the one threshold (51) or the other threshold (52) to one among said inputs (C1 - C8) of comparing means (A1 - A8).

5. The device as recited in any one of preceding claims, characterized in that a comparing means is provided for each input (C1 - C8) and includes an operational amplifier (A1 - A8) which is associated with said input and connected as a comparator, with an input of said amplifier being connected to said threshold means (9) while the other input is connected to an input (C1 - C8) of said microcircuit card, the output of said amplifier being adapted to control an indicating device (11 - 18; 62).

6. The device as recited in any one of preceding claims, characterized in that said indicating device includes signal lamps (11 - 18), and in that all signal lamps (11 - 18) associated with said microcircuit card inputs (C₁ - C₈) remain switched off when no short-circuit is present through inputs of said card (4), while all signal lamps (11 - 18) are turned on when all card inputs are in an operational condition.

7. The device as recited in any one of preceding claims, characterized in that said means adapted to apply an inverse voltage include a switch (5) such that a voltage is applied to inputs (C1 - C8) of said microcircuit card (4) only when said switch (5) is closed.

8. The device as recited in any one of preceding claims, characterized in that said device includes small size, self-contained and portable case (2), allowing a spot analysis to be carried out, with said case including a housing which opens into the outside by means of a slot (3) into which said microcircuit card can be inserted.

9. The device as recited in any one of preceding claims, characterized in that said device includes means (T) for dynamically testing said microcircuit card.

10. The device as recited in claim 9, characterized in that said dynamic testing means include an analogue switch (34), allowing the voltage level at the terminals of said microcircuit card to be changed and to be switched from inverse voltage to normal voltage, a microprocessor (36) adapted to be sequentially activated after static testing shows a positive result, and alphanumeric display means (D) for displaying dynamic testing result, with said microprocessor being programmed to allow some card data to be read.

11. The device as recited in any one of preceding claims 1-9, characterized in that said device includes a microcontroler (40) adapted to automatically control the progress of static testing operations and, if so desired, of dynamic testing ones, the beginning of a control cycle being commanded by closing a push-button (5), the latter being obtained by action of said microcircuit card at the introduction completion, with said indicating device including a display (62).

12. The device as recited in claim 11, characterized in that said device includes a multiplexor (53), in combination with at least two amplifiers (Ai) connected as comparators, in order to allow sequential analysis of each contact of said microcircuit card to be carried out.

13. The device as recited in claim 11 or 12, characterized in that said device is arranged with a view to carrying out a current measurement on supply sources (45, 46) and a test about voltages.

14. The device as recited in any one of preceding claims 11 - 13, characterized in that said device includes a serial interface (63) in order to allow said microcontroler (40) to communicate with peripherals, especially with a magnetic track reader or a display of the "Minitel" type.

15. The device as recited in any one of preceding claims 1 - 7, characterized in that said device is incorporated in a card operating system for ensuring safety pre-checking before card is operated upon.
